# EUROPÄISCHE PATENTSCHRIFT

(11) **EP 1 198 700 B1**
(45) Veröffentlichungstag und Bekanntmachung des Hinweises auf die Patenterteilung: **06.10.2004**
(21) Anmeldenummer: 00949271.1
(22) Anmeldetag: 06.07.2000
(51) Int. Cl.: G01M 3/32

(54) **FOLIENLECKSUCHKAMMER**
FOIL LEAK DETECTION CHAMBER
CHAMBRE DE DETECTION DE FUITES SUR DES FEUILLES

(30) Priorität: 27.07.1999 DE 19935293
(43) Veröffentlichungstag der Anmeldung: 24.04.2002
(73) Patentinhaber: Inficon GmbH, 50968 Köln (DE)
(72) Erfinder: WIDT, Rudi, D-50969 Köln (DE); ABELEN, Thomas, D-51145 Köln (DE)
(74) Vertreter: Leineweber, Jürgen, Dipl.-Phys.
(86) Internationale Anmeldenummer: PCT/EP2000/006390
(87) Internationale Veröffentlichungsnummer: WO 2001/007887

(56) Entgegenhaltungen:
- DE-A- 2 348 319
- DE-A- 19 642 099
- US-A- 5 894 225

## Beschreibung

Folienlecksuchkammer mit zwei gelenkig miteinander verbundenen Rahmen, mit in den Rahmen eingespannten Folien, mit einem von den Folien gebildeten Testraum, mit einer zwischen den Rahmen befindlichen Dichtung und mit mindestens einer, vorzugsweise mehreren Bohrungen in mindestens einem der Rahmen, welche mit dem Einlass einer Vakuumpumpe verbindbar sind.

Eine Folienlecksuchkammer dieser Art ist aus der DE-A-196 42 099 bekannt. Sie ist Bestandteil eines Lecksuchgerätes, das mit den üblichen Mitteln (Vakuumpumpen, Testgassensor, Steuermittel usw.) ausgerüstet ist.

Bei Folienlecksuchgeräten der hier betroffenen Art sind die beiden Rahmen im wesentlichen horizontal angeordnet. Der obere Rahmen ist auf der dem Gelenk gegenüber liegenden Seite mit einem Handgriff ausgerüstet.

Um den von den Folien gebildeten Testraum zu öffnen, wird der obere Rahmen angehoben. Ein auf Lecks zu untersuchender Prüfling wird danach auf die untere Folie gelegt. Das Schließen des Testraumes erfolgt durch Absenken des oberen Rahmens, und zwar soweit, dass die zwischen den Rahmen befindliche Dichtung den vakuumdichten Verschluss der Kammer sicherstellt.

Die Prüflinge haben in aller Regel ein Volumen, das eine mehr oder weniger große Dehnung der Folien erforderlich macht. Dazu ist das Aufbringen einer Kraft erforderlich, die der Absenkbewegung des oberen Rahmens entgegengerichtet ist und erst dann kompensiert ist, wenn der Unterdruck im Testraum ausreichend niedrig ist. Bis zum Erreichen dieses Unterdrucks muss die das Folienlecksuchgerät bedienende Person den oberen Rahmen festhalten. Diese Zeitspanne ist relativ lang, da die elastischen Wandungen des Testraums zunächst nachgeben und ein maßgeblicher Unterdruck erst dann entsteht, wenn sich die Folien dem Prüfling angelegt haben und der noch vorhandene freie Raum im wesentlichen sein kleinsten Volumen angenommen hat.

Bei größeren Folienlecksuchgeräten der hier betroffenen Art ist es bekannt, diese mit einer Feder auszurüsten, deren Kraft ebenfalls der Schließbewegung des oberen Rahmens entgegengerichtet ist. Durch eine solche Feder soll erreicht werden, dass sich der obere Rahmen während des Flutens entweder selbständig öffnet oder die zu diesem Zeitpunkt notwendige Öffnungsbewegung des Rahmens zumindest unterstützt wird. Infolge dieser zweiten, der Schließbewegung entgegengerichteten Kraft ist der für das Festhalten des oberen Rahmens notwendige Zeitaufwand bis zum sicheren Verschluss des Testraumes noch größer.

Der vorliegenden Erfindung liegt die Aufgabe zugrunde, das Schließverhalten einer Folienlecksuchkammer der hier betroffenen Art zu verbessern.

Erfindungsgemäß wird diese Aufgabe durch die kennzeichnenden Merkmale der Patentansprüche gelöst.

Dadurch, dass eine vom eigentlichen Testraum unabhängige, evakuierbare Randzone mit relativ kleinem Volumen vorhanden ist, entsteht in dieser Randzone sehr schnell der erforderliche Unterdruck, der den auf den unteren Rahmen abgesenkten oberen Rahmen festhält. Der Druck im Testraum selbst muss sich zu diesem Zeitpunkt noch nicht wesentlich verringert haben.

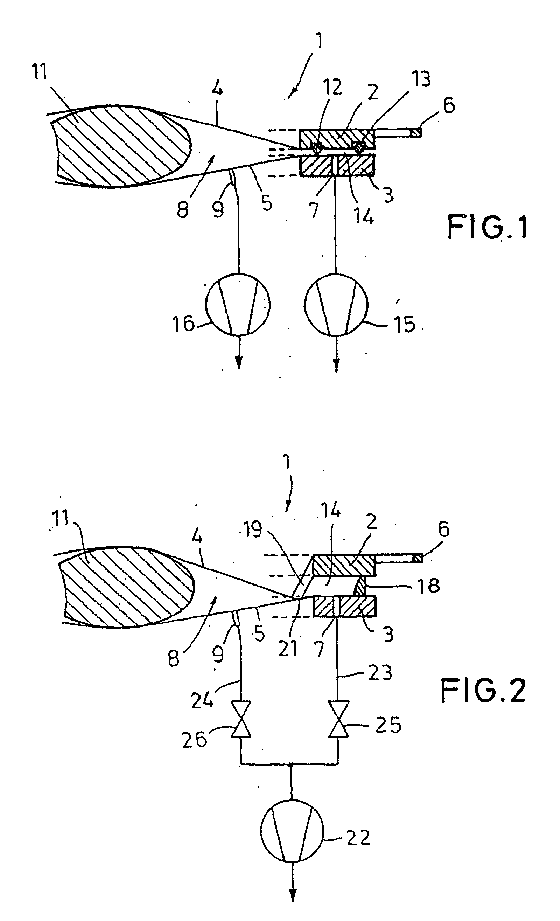

Weitere Vorteile und Einzelheiten der Erfindung sollen an Hand von in den Figuren 1 und 2 schematisch dargestellten Ausführungsbeispielen erläutert werden. Es zeigen
- Figur 1 einen Teilschnitt durch eine Ausführung mit einer Doppeldichtung und
- Figur 2 einen Teilschnitt durch eine Ausführung mit einem auf eine der Folien einwirkenden Vorsprung.

In den Figuren sind die Folienlecksuchkammer mit 1, seine beiden Rahmen mit 2, 3, die darin eingespannten Folien mit 4, 5, ein am oberen Rahmen 2 vorgesehener Handgriff mit 6, mit einer Vakuumpumpe verbindbare Bohrungen in einem der Rahmen 2, 3, vorzugsweise dem im unteren Rahmen 3, mit 7, der eigentliche Testraum mit 8, ein an vorzugsweise der unteren Folie 5 vorgesehener, mit einer Vakuumpumpe verbindbarer Anschluss mit 9 udn ein im Testraum 8 befindlicher Prüfling mit 11 bezeichnet.

Bei der Ausführung nach Figur 1 sind die Rahmen 2, 3 mit einer Doppeldichtung ausgerüstet. Sie umfasst zwei konzentrische Dichtringe 12, 13 und den Zwischenraum 14. In diesem Zwischenraum münden die Bohrungen 7, so dass er die evakuierbare Randzone bildet.

An die Bohrungen 7 und an den Anschluss 9 sind je eine Vakuumpumpe 15, 16 angeschlossen. Nach dem Absenken des oberen Rahmens 2 auf den unteren Rahmen 3 beginnt der Evakuierungsprozess. Infolge des sehr kleinen Volumens des Zwischenraumes 14 wird darin sehr schnell ein Unterdruck erreicht, der den oberen Rahmen 2 festhält.

Beim Ausführungsbeispiel nach Figur 2 befindet sich zwischen dem Rahmen 2, 3 nur ein Dichtring 18. Zusätzlich ist der obere Rahmen 2 mit einem umlaufenden Vorsprung 19 ausgerüstet, der die im oberen Rahmen 2 eingespannte Folie 4 in Richtung unteren Rahmen 3 ausformt. Der umlaufende freie Rand 21 des Vorsprungs 19 hat eine solche Lage, dass die Folien 4, 5 bei abgesenktem oberen Rahmen 2 einander berühren. Dadurch entsteht zwischen der Dichtlippe 18 und der Berührungslinie der Folien 4, 5 die gewünschte evakuierbare Randzone 14.

Bei der Ausführung nach Figur 2 ist nur eine Vakuumpumpe 22 vorgesehen. Ihr Einlass ist über die beiden Leitungen 23, 24 mit den Bohrungen 7 bzw. dem Anschluss 9 verbunden. Jede der Leitungen 23, 24 ist mit einem Ventil 25, 26 ausgerüstet. Dadurch besteht die Möglichkeit, zunächst die evakuierbare Randzone 14 zu evakuieren, um einen ausreichend niedrigen Unterdruck in der Randzone 14 zu erzeugen. Danach erfolgt die Evakuierung des Testraumes 8.

Ein wesentlicher Vorteil der Lösung nach Figur 2 besteht darin, dass der Rahmen 2 oder 3 einer bereits fertiggestellten Folienlecksuchkammer 1 mit dem Vorsprung 19 nachgerüstet werden kann. Bei neuen Folienlecksuchkammern 1 ist der Vorsprung 19 zweckmäßig eine einstückig mit einem der Rahmen 2, 3 verbundene Ausformung.

## Patentansprüche

1. Folienlecksuchkammer (1) mit zwei gelenkig miteinander verbundenen Rahmen (2, 3), mit in den Rahmen eingespannten Folien (4, 5), mit einem von den Folien gebildeten Testraum (8), mit einer zwischen den Rahmen befindlichen Dichtung (12, 13, 18) und mit mindestens einer, vorzugsweise mehreren Bohrungen (7) in mindestens einem der beiden Rahmen (2, 3), welche mit dem Einlass einer Vakuumpumpe (15, 16, 22) verbindbar sind, **dadurch gekennzeichnet, dass** eine unabhängig vom Testraum (8) evakuierbare Randzone (14) vorgesehen ist, in die die Bohrungen (7) münden.

2. Kammer nach Anspruch 1, **dadurch gekennzeichnet, dass** sich zwischen den Rahmen (2, 3) zwei konzentrische Dichtungen (12, 13) befinden, deren Zwischenraum die Randzone (14) bildet.

3. Kammer nach Anspruch 1, **dadurch gekennzeichnet, dass** einer der Rahmen (2, 3) mit einem inneren, umlaufenden Vorsprung (19) ausgerüstet ist, dass der umlaufende Rand (21) des Vorsprungs (19) der zugehörigen Folie (4, 5) aufliegt und eine solche Position hat, dass die beiden Folien (4, 5) bei aufeinanderliegenden Rahmen (2, 3) einander berühren.

4. Kammer nach Anspruch 3, **dadurch gekennzeichnet, dass** der Vorsprung (19) als einstückig mit einem der Rahmen (2, 3) verbundene Ausformung ausgebildet ist.

## Claims

1. Foil leak detection chamber (1) having two frames (2, 3) hinge-connected to one another, having foils (4, 5) clamped in the frames, having a test chamber (8) formed by the foils, having a seal (12, 13, 18) situated between the frames, and having at least one bore (7), preferably a plurality of bores (7) in at least one of the two frames (2, 3), which bores are connectable to the inlet of a vacuum pump (15, 16, 22), **characterized in that** a boundary zone (14) evacuable independently of the test chamber (8) is provided, into which the bores (7) open.

2. Chamber according to claim 1, **characterized in that** situated between the frames (2, 3) are two concentric seals (12, 13), the space between which forms the boundary zone (14).

3. Chamber according to claim 1, **characterized in that** one of the frames (2, 3) is equipped with an inner, circumferential projection (19), that the i circumferential edge (21) of the projection (19) lies on the appropriate foil (4, 5) and has such a position that the two foils (4, 5) are in mutual contact when the frames (2, 3) lie one on top of the other.

4. Chamber according to claim 3, **characterized in that** the projection (19) takes the form of an extruded portion integrally connected to one of the frames (2, 3).

## Revendications

1. Chambre de détection de fuite à feuilles (1), comprenant deux cadres (2, 3) liés ensemble de manière articulée, des feuilles (4, 5) serrées dans lesdits cadres, une chambre d'essai (8) formée par lesdites feuilles, une garniture d'étanchéité (12, 13, 18) située entre les cadres et au moins un, de préférence plusieurs, alésages (7) dans au moins l'un des deux cadres (2, 3) lesquels peuvent être reliés à l'entrée d'une pompe à vide (15, 16, 22), **caractérisée en ce qu'**il est prévu une zone de bord (14) évacuable de manière indépendante de la chambre d'essai (8) et dans laquelle lesdits alésages (7) débouchent.

2. Chambre selon la revendication 1, **caractérisée en ce que** la zone de bord (14) est formée par l'espace intercalaire entre deux garnitures d'étanchéité concentriques (12, 13) situées entre les cadres (2, 3).

3. Chambre selon la revendication 1, **caractérisée en ce que** l'un desdits cadres (2, 3) est muni d'une saillie intérieure périphérique (19), que le bord périphérique (21) de la saillie (19) recouvre ladite feuille (4, 5) correspondante et occupe une position telle que les deux feuilles (4, 5) entrent en contact l'une avec l'autre lorsque les cadres (2, 3) reposent l'un sur l'autre.

4. Chambre selon la revendication 3, **caractérisée en ce que** la saillie (19) est constituée d'une formation liée d'un seul tenant à l'un des cadres (2, 3).
